# EUROPEAN PATENT APPLICATION

(11) **EP 4 834 963 A1**
(43) Date of publication of application: **04.11.2026**
(21) Application number: 24913391.9
(22) Date of filing: 26.12.2024
(51) Int. Cl.: C08F 222/10, C08F 220/20, C08F 220/18, C08F 290/06, C08F 2/50, C08K 5/13, A61C 7/08, B33Y 70/00, B33Y 80/00

(54) **PHOTOCURABLE SHAPE-MEMORY POLYMER COMPOSITION FOR DIRECT 3D PRINTING, AND ORTHODONTIC DEVICE MANUFACTURED USING SAME**

(30) Priority: 27.12.2023 KR 20230192434
(71) Applicant: ODS Co. Ltd, Incheon 21990 (KR)
(72) Inventor: PARK, Sungwon, Incheon 21986 (KR); SIM, Miyoung, Incheon 21986 (KR)
(74) Representative: You Patent
(86) International application number: PCT/KR2024/021101
(87) International publication number: WO 2025/143784

(57) **Abstract**

The present disclosure relates to a photocurable shape-restoring polymeric composition for direct three-dimensional (3D) printing and an orthodontic appliance manufactured therefrom. More particularly, the present disclosure relates to a photocurable shape-restoring polymeric composition that exhibits stiffness, rigidity, and elasticity suitable for orthodontic treatment within a first temperature range and exhibits shape-restoration properties within a second temperature range different from the first temperature range, and to an orthodontic appliance manufactured using the photocurable shape-restoring polymeric composition.

The photocurable shape-restoring polymeric composition comprises a photocurable compound and a photoinitiator and is suitable for directly manufacturing orthodontic appliances by three-dimensional (3D) printing.

## Description

### TECHNICAL FIELD

The present disclosure relates to a photocurable shape-restoring polymeric composition for direct three-dimensional (3D) printing and an orthodontic appliance manufactured therefrom.

More particularly, the present disclosure relates to a photocurable shape-restoring polymeric composition that exhibits stiffness, rigidity, and elasticity suitable for orthodontic treatment within a first temperature range and exhibits shape-restoration properties within a second temperature range different from the first temperature range, and to an orthodontic appliance manufactured using the same.

### BACKGROUND ART

Elasticity refers to the property of a material that allows the material to return to its original shape after being deformed by an external force. Conventional orthodontic appliances utilize such elasticity to perform tooth movement.

Specifically, orthodontic appliances are designed based on a predetermined tooth movement setup and may be smoothly fitted onto a patient's dentition due to their elasticity. After placement, the appliances may move, rotate, extrude, and/or intrude target teeth through the orthodontic force generated by the elastic deformation of the appliance.

Teeth are fixed within the dental arch by alveolar bone, periodontal ligaments, gingival tissue, and surrounding structures. When an orthodontic force is applied to a tooth, the surrounding periodontal tissues generate a reaction force having substantially the same magnitude and an opposite direction. This reaction force is generally referred to as resistance.

Such resistance varies throughout the orthodontic treatment process and may change over time even for the same tooth. A tooth exhibiting relatively high resistance during an initial treatment stage may become easier to move after a continuous orthodontic force is applied within physiological limits.

However, when conventional orthodontic appliances are worn intraorally, the appliances may undergo deformation due to the resistance of the target teeth. As a result, the intended tooth movement, rotation, extrusion, and/or intrusion may not be achieved.

Accordingly, a deformed orthodontic appliance often must be replaced with a newly manufactured appliance in order to continue treatment and achieve the original treatment objectives.

Furthermore, conventional orthodontic appliances generally require acquisition of oral cavity data, preparation of an impression or scan, fabrication of a dental model, and subsequent manufacture of a customized appliance. Such processes are labor-intensive and require repeated fabrication of individual appliances.

Therefore, there remains a need for a shape-restoring polymeric composition that exhibits stiffness, rigidity, and elasticity suitable for orthodontic treatment within a first temperature range while exhibiting shape-restoration properties within a second temperature range different from the first temperature range.

There also remains a need for a photocurable polymeric composition that can be conveniently and accurately fabricated by direct 3D printing techniques.

Further, there remains a need for a polymeric composition capable of maintaining a robust crystalline structure even under high-temperature sterilization conditions.

### SUMMARY OF THE INVENTION

### Technical Problem

An object of the present disclosure is to provide a shape-restoring polymeric composition exhibiting stiffness, rigidity, and elasticity suitable for orthodontic treatment within a first temperature range while exhibiting shape-restoration properties within a second temperature range different from the first temperature range.

Another object of the present disclosure is to provide a photocurable polymeric composition that can be conveniently and accurately fabricated by direct three-dimensional (3D) printing.

A further object of the present disclosure is to provide a polymeric composition capable of maintaining a robust crystalline structure even under high-temperature sterilization conditions.

### Solution to Problem

According to one embodiment, a photocurable shape-restoring polymeric composition comprising a photocurable compound and a photoinitiator is provided.

The photocurable compound comprises at least one compound selected from the group consisting of aliphatic urethane dimethacrylate, caprolactone urethane triacrylate, bisphenol A ethoxylate dimethacrylate, hydroxyethyl methacrylate, and isobornyl methacrylate.

The photoinitiator comprises at least one compound selected from the group consisting of bis(2,4,6-trimethylbenzoyl)-phenylphosphine oxide, methyl phenylglyoxylate, and 2,4,6-trimethylbenzoyl-diphenylphosphine oxide.

In some embodiments, the composition further comprises 2,6-di-tert-butyl-p-cresol as an antioxidant.

In some embodiments, the photocurable compound comprises 40 to 70 parts by weight of aliphatic urethane dimethacrylate; 1 to 25 parts by weight of caprolactone urethane triacrylate; 1 to 20 parts by weight of bisphenol A ethoxylate dimethacrylate; 1 to 20 parts by weight of hydroxyethyl methacrylate; and 1 to 30 parts by weight of isobornyl methacrylate, based on 100 parts by weight of the total photocurable shape-restoring polymeric composition.

In some embodiments, the photoinitiator comprises 1 to 14 parts by weight of bis(2,4,6-trimethylbenzoyl)-phenylphosphine oxide; 0.1 to 15 parts by weight of methyl phenylglyoxylate; and 5 to 40 parts by weight of 2,4,6-trimethylbenzoyl-diphenylphosphine oxide, based on 100 parts by weight of the total photocurable shape-restoring polymeric composition.

In some embodiments, the composition exhibits a glass transition temperature (Tg) of 50°C to 110°C after curing.

In some embodiments, the composition recovers its original shape at the glass transition temperature.

In some embodiments, the composition maintains crystallinity at 115°C to 140°C under atmospheric pressure after curing.

According to another embodiment, an orthodontic appliance comprising the cured photocurable shape-restoring polymeric composition is provided.

According to a further embodiment, a method of manufacturing an orthodontic appliance using the photocurable shape-restoring polymeric composition is provided.

In some embodiments, the orthodontic appliance is manufactured by direct three-dimensional (3D) printing of the photocurable shape-restoring polymeric composition.

### Advantageous Effects

The photocurable shape-restoring polymeric composition exhibits stiffness, rigidity, and elasticity suitable for orthodontic treatment within a first temperature range and recovers its original shape within a second temperature range higher than the first temperature range.

The composition can be directly fabricated into an orthodontic appliance by three-dimensional (3D) printing.

The composition maintains a robust crystalline structure even under high-temperature sterilization conditions and retains shape-restoration characteristics after sterilization.

### BRIEF DESCRIPTION OF DRAWINGS

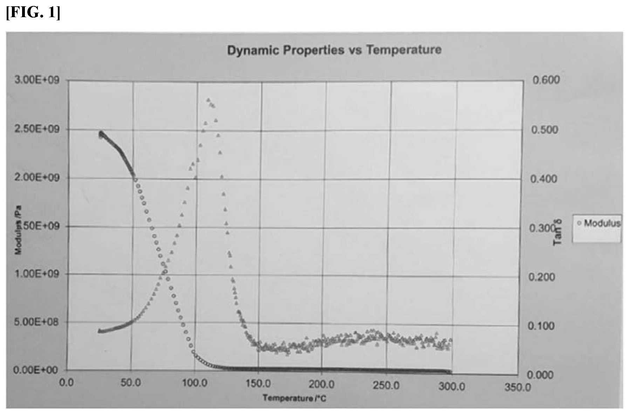

FIG. 1 is a graph illustrating the glass transition temperature of a photocurable shape-restoring polymeric composition according to an embodiment of the present disclosure.

### DETAILED DESCRIPTION OF EMBODIMENTS

The terms and expressions used in the present specification and the appended claims are not intended to be limited to their ordinary dictionary meanings. Rather, those skilled in the art will readily appreciate that such terms and expressions are used in a manner consistent with the technical spirit and scope of the present disclosure and are intended to convey the meaning and concepts that the present disclosure seeks to communicate.

Further, those skilled in the art will appreciate that the aspects, embodiments, examples, and configurations described herein are merely preferred examples provided to facilitate understanding and implementation of the present disclosure and are not intended to limit the scope of the present disclosure.

In addition, descriptions and specific examples relating to each component disclosed herein may be equally applicable to other components disclosed herein. Accordingly, those skilled in the art will understand that all possible combinations of the various components and specific embodiments disclosed herein fall within the scope of the present disclosure.

As used herein, the term "and/or" includes any one of the associated listed items and any combination of two or more thereof. Unless the context clearly indicates otherwise, singular terms shall include the corresponding plural forms.

As used herein, the terms "comprise," "comprises," and "comprising" are intended to be inclusive and do not preclude the presence or addition of one or more other elements, features, integers, steps, operations, components, or groups thereof. In contrast, the terms "consist," "consists," and "consisting of" are intended to exclude the presence of additional elements not expressly recited.

As used herein, the term "to" when describing a numerical range refers to a range including the recited lower limit and upper limit. Where multiple upper limits and/or multiple lower limits are disclosed, any combination of a disclosed lower limit and a disclosed upper limit is contemplated and forms part of the present disclosure.

As used herein, the terms "about" and/or "approximately" refer to a range within ±10% of the stated value unless otherwise specified.

The terminology used herein and in the appended claims should not be construed as limited to ordinary or dictionary meanings. Rather, consistent with the principle that an inventor may define terms in a manner that best describes the invention, such terminology should be interpreted in a manner consistent with the technical spirit and scope of the present disclosure. Accordingly, the embodiments disclosed herein are merely exemplary embodiments of the present disclosure and are not intended to represent all aspects of the inventive concept. Various equivalents, modifications, and variations may be made by those skilled in the art without departing from the spirit and scope of the present disclosure.

Furthermore, each description and embodiment disclosed herein may be applied to other descriptions and embodiments disclosed herein. Thus, all combinations of the various elements disclosed herein are intended to fall within the scope of the present disclosure. Any omission in one embodiment may be supplemented by disclosures provided in other embodiments. Accordingly, the scope of the present disclosure should not be construed as being limited by the specific examples described below.

According to one embodiment of the present disclosure, a photocurable shape-restoring polymeric composition is provided.

The photocurable shape-restoring polymeric composition may exhibit stiffness, rigidity, and elasticity suitable for orthodontic treatment within a first temperature range after curing, while exhibiting shape-restoration properties within a second temperature range different from the first temperature range.

More specifically, the photocurable shape-restoring polymeric composition includes both amorphous and crystalline structures. Accordingly, when the composition is cured and formed into an orthodontic appliance, the appliance undergoes temporary deformation during intraoral use within the first temperature range.

When the appliance is subsequently exposed to the second temperature range, molecular mobility within the amorphous regions increases, causing the material to exhibit rubber-like elasticity. In the absence of external stress, such as resistance from a target tooth undergoing orthodontic treatment, the appliance rapidly recovers its original shape through a shape-restoration function. As a result, deformation of the orthodontic appliance is substantially reversed.

Thereafter, upon returning to a predetermined temperature, for example, the first temperature range, the appliance recovers its elasticity together with its stiffness and rigidity, thereby restoring its orthodontic force.

Generally, low-molecular-weight materials undergo a phase transition from a solid state to a liquid state upon heating. In contrast, polymeric materials typically exhibit another transition prior to such a phase transition, and the temperature at which this transition occurs is referred to as the glass transition temperature (Tg).

Unlike low-molecular-weight compounds, which generally form a solid phase through regular molecular packing and crystalline ordering, polymeric compositions typically have substantially larger molecular weights and therefore often contain significant amorphous regions in which the molecular chains are not regularly arranged and crystalline structures are difficult to form. As a result, many polymeric materials exhibit a semi-crystalline structure including both crystalline regions and amorphous regions.

When heat is applied to a polymeric composition, the kinetic energy of molecules within the amorphous regions increases, resulting in enhanced micro-Brownian motion. Consequently, a rigid polymeric material transitions into a material exhibiting rubber-like elasticity.

Accordingly, the glass transition temperature (Tg) corresponds to the temperature at which molecules within the amorphous regions become sufficiently mobile to transition into a viscous liquid-like or rubber-like state. Conversely, as the temperature decreases, the amorphous polymeric material exhibits glassy-state characteristics, such as brittleness, stiffness, and rigidity.

Furthermore, because each polymeric material possesses its own characteristic glass transition temperature depending on its molecular structure and composition, the glass transition temperature can be used as an identifying characteristic of a polymeric material.

Since the glass transition temperature is generally associated with amorphous polymeric regions, a purely crystalline polymer may not exhibit a well-defined glass transition temperature. Likewise, a purely amorphous polymer may exhibit a glass transition temperature without exhibiting a distinct melting temperature (Tm).

However, because many polymeric materials contain both amorphous and crystalline structures, most polymeric materials may exhibit both a glass transition temperature and a melting temperature. In general, the glass transition temperature is lower than the melting temperature. A relatively high glass transition temperature may indicate that the polymer exhibits relatively high thermal resistance and is less readily softened or melted.

Accordingly, the photocurable shape-restoring polymeric composition disclosed herein includes both amorphous and crystalline structures.

After curing, the composition may exhibit stiffness, rigidity, and elasticity suitable for orthodontic treatment within a first temperature range, for example, from about 15°C to about 40°C, while exhibiting a glass transition temperature within a second temperature range different from the first temperature range, for example, from about 50°C to about 110°C.

Within the second temperature range, molecular mobility increases and the molecules become activated, thereby enabling rapid restoration of the shape of an appliance or product formed from the composition. When the temperature subsequently returns to the first temperature range, the shape and physical properties of the appliance or product may be restored such that they are substantially equivalent to those originally possessed at the time of manufacture, including the original stiffness and rigidity.

Furthermore, when the photocurable shape-restoring composition is cured and formed into an orthodontic appliance, the composition may exhibit excellent high-temperature resistance. In particular, in consideration of hygiene and sterilization requirements associated with intraoral use, the cured composition maintains a robust crystalline structure under autoclave sterilization conditions commonly used in dental clinics, such as temperatures ranging from about 121°C to about 135°C under atmospheric pressure.

As a result, the composition retains its shape-restoration and/or shape-memory characteristics even after exposure to high-temperature sterilization conditions.

In certain embodiments, the photocurable shape-restoring polymeric composition comprises a photocurable compound, a photoinitiator, and an antioxidant.

The photocurable compound may comprise at least one compound selected from the group consisting of aliphatic urethane dimethacrylate, caprolactone urethane triacrylate, bisphenol A ethoxylate dimethacrylate, hydroxyethyl methacrylate, and isobornyl methacrylate.

In some embodiments, caprolactone urethane trimethacrylate may be used in place of caprolactone urethane triacrylate.

In certain embodiments, the photocurable compound may comprise at least one compound selected from compounds represented by the following general formulas or structural formulas.

**[Chemical Formula 1]** R'CH2[C(CH3)(R)CH2]2CH2R' (R=H or CH3, R'=NHCO2CH2CH2O2CC(CH3)=CH2)

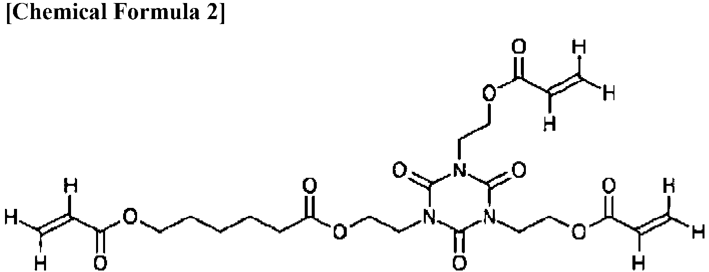

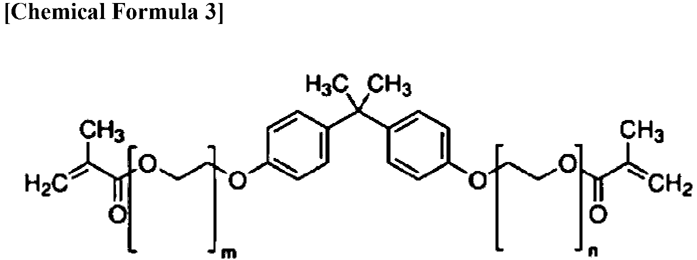

**[Chemical Formula 4]** CH2=C(CH3)COOCH2CH2OH

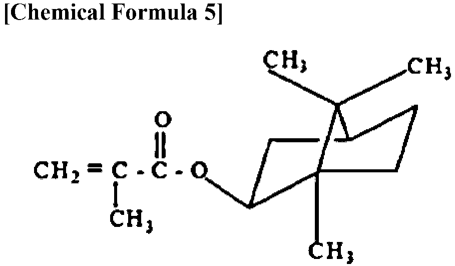

In certain embodiments, the photocurable compound may comprise about 40 to about 70 parts by weight of aliphatic urethane dimethacrylate, based on 100 parts by weight of the total photocurable shape-restoring polymeric composition.

Preferably, the photocurable compound may comprise about 50 to about 65 parts by weight of aliphatic urethane dimethacrylate, based on 100 parts by weight of the total photocurable shape-restoring polymeric composition.

In certain embodiments, the photocurable compound may comprise about 1 to about 25 parts by weight of caprolactone urethane triacrylate, based on 100 parts by weight of the total photocurable shape-restoring polymeric composition.

Preferably, the photocurable compound may comprise about 4 to about 25 parts by weight of caprolactone urethane triacrylate, based on 100 parts by weight of the total photocurable shape-restoring polymeric composition.

In certain embodiments, caprolactone urethane trimethacrylate may be used in place of caprolactone urethane triacrylate in substantially the same proportion.

In certain embodiments, the photocurable compound may comprise about 1 to about 20 parts by weight of bisphenol A ethoxylate dimethacrylate, based on 100 parts by weight of the total photocurable shape-restoring polymeric composition.

Preferably, the photocurable compound may comprise about 4 to about 22 parts by weight of bisphenol A ethoxylate dimethacrylate, based on 100 parts by weight of the total photocurable shape-restoring polymeric composition.

In certain embodiments, the photocurable compound may comprise about 1 to about 20 parts by weight of hydroxyethyl methacrylate, based on 100 parts by weight of the total photocurable shape-restoring polymeric composition.

Preferably, the photocurable compound may comprise about 4 to about 25 parts by weight of hydroxyethyl methacrylate, based on 100 parts by weight of the total photocurable shape-restoring polymeric composition.

In certain embodiments, the photocurable compound may comprise about 1 to about 30 parts by weight of isobornyl methacrylate, based on 100 parts by weight of the total photocurable shape-restoring polymeric composition.

Preferably, the photocurable compound may comprise about 4 to about 35 parts by weight of isobornyl methacrylate, based on 100 parts by weight of the total photocurable shape-restoring polymeric composition.

In some embodiments, the photoinitiator comprises at least one compound selected from the group consisting of bis(2,4,6-trimethylbenzoyl)-phenylphosphine oxide, methyl phenylglyoxylate, and 2,4,6-trimethylbenzoyl-diphenylphosphine oxide.

In certain embodiments, the photoinitiator may comprise about 1 to about 14 parts by weight of bis(2,4,6-trimethylbenzoyl)-phenylphosphine oxide, based on 100 parts by weight of the total photocurable shape-restoring polymeric composition.

Preferably, the photoinitiator may comprise about 1.2 to about 15 parts by weight of bis(2,4,6-trimethylbenzoyl)-phenylphosphine oxide, based on 100 parts by weight of the total photocurable shape-restoring polymeric composition.

In certain embodiments, the photoinitiator may comprise about 0.1 to about 15 parts by weight of methyl phenylglyoxylate, based on 100 parts by weight of the total photocurable shape-restoring polymeric composition.

Preferably, the photoinitiator may comprise about 0.4 to about 14.5 parts by weight of methyl phenylglyoxylate, based on 100 parts by weight of the total photocurable shape-restoring polymeric composition.

In certain embodiments, the photoinitiator may comprise about 5 to about 40 parts by weight of 2,4,6-trimethylbenzoyl-diphenylphosphine oxide, based on 100 parts by weight of the total photocurable shape-restoring polymeric composition.

Preferably, the photoinitiator may comprise about 5 to about 35 parts by weight of 2,4,6-trimethylbenzoyl-diphenylphosphine oxide, based on 100 parts by weight of the total photocurable shape-restoring polymeric composition.

In certain embodiments, the antioxidant may comprise 2,6-di-tert-butyl-p-cresol (BHT).

In certain embodiments, the photocurable shape-restoring polymeric composition may comprise about 0.3 to about 1.5 parts by weight of 2,6-di-tert-butyl-p-cresol, based on 100 parts by weight of the total photocurable shape-restoring polymeric composition.

Preferably, the photocurable shape-restoring polymeric composition may comprise about 0.4 to about 1.2 parts by weight of 2,6-di-tert-butyl-p-cresol, based on 100 parts by weight of the total photocurable shape-restoring polymeric composition.

In certain embodiments, the photocurable shape-restoring polymeric composition may exhibit a glass transition temperature (Tg) of about 50°C to about 110°C after curing.

In certain embodiments, the photocurable shape-restoring polymeric composition may maintain crystallinity at about 115°C to about 140°C under atmospheric pressure after curing.

In certain embodiments, the photocurable shape-restoring polymeric composition is suitable for direct three-dimensional (3D) printing applications.

In certain embodiments, the photocurable shape-restoring polymeric composition is suitable for the manufacture of orthodontic appliances.

In certain embodiments, the photocurable shape-restoring polymeric composition is suitable for the manufacture of transparent orthodontic aligners.

According to another aspect of the present disclosure, there is provided an orthodontic appliance comprising a cured photocurable shape-restoring polymeric composition described herein.

Generally, an orthodontic appliance used in clinical orthodontic treatment is adapted to fit closely against teeth through its elastic properties and an inner surface gap within a first temperature range, for example, from 15°C to 40°C, which includes normal body temperature ranging from 36.5°C to 37.5°C. During use, the orthodontic appliance undergoes deformation due to resistance exerted by the teeth against the orthodontic force.

The orthodontic force may be generated and controlled by various factors, including the elasticity of the orthodontic appliance, the intended tooth movement distance, the rotational angle of the tooth, the thickness of the orthodontic appliance, the spacing of the inner surface gap, and various auxiliary orthodontic attachments.

An orthodontic appliance manufactured from the photocurable shape-restoring polymeric composition according to the present disclosure rapidly recovers its original shape at the glass transition temperature, for example, within a temperature range of about 50°C to about 110°C. More specifically, the orthodontic appliance recovers its original shape and restores its elastic properties within about 5 seconds to about 60 seconds, preferably within about 20 seconds to about 30 seconds.

Thereafter, when the orthodontic appliance is re-applied to the dentition, the appliance continues to exert orthodontic force such that the originally intended tooth movement objectives are achieved.

Accordingly, the orthodontic appliance manufactured from the photocurable shape-restoring polymeric composition according to the present disclosure is fabricated from a polymeric composition designed to exhibit a glass transition temperature within a range of about 50°C to about 110°C while maintaining stiffness, rigidity, and elasticity within a temperature range including room temperature and body temperature.

At the glass transition temperature, the shape-restoration force of the orthodontic appliance may be less than the resistance force exerted by the teeth. As a result, the orthodontic appliance recovers its shape under substantially stress-free conditions and subsequently regains its original stiffness, rigidity, and elasticity, thereby restoring its functionality as an orthodontic appliance.

In certain embodiments, the orthodontic appliance manufactured from the photocurable shape-restoring polymeric composition described herein exhibits a glass transition temperature of about 50°C to about 110°C.

In certain embodiments, the orthodontic appliance manufactured from the photocurable shape-restoring polymeric composition described herein maintains crystallinity at 115°C to 140°C under atmospheric pressure after curing.

The present disclosure will now be described in further detail with reference to the following Examples. Process conditions and preparatory procedures not expressly described in the Examples may be readily understood and selected by a person having ordinary skill in the art based on the present disclosure without undue experimentation.

Unless otherwise specified, each step of the preparation methods described herein may be performed at room temperature, for example, from about 15°C to about 25°C, using conventional equipment and techniques readily available to those skilled in the art.

### Examples 1-15

### Preparation of Photocurable Shape-Restoring Polymeric Compositions

Aliphatic urethane dimethacrylate (PP1), caprolactone urethane triacrylate (PP2), bisphenol A ethoxylate dimethacrylate (PP3), hydroxyethyl methacrylate (PP4), and isobornyl methacrylate (PP5) were prepared as photocurable compounds.

Bis(2,4,6-trimethylbenzoyl)-phenylphosphine oxide (ID1), methyl phenylglyoxylate (ID2), and 2,4,6-trimethylbenzoyl-diphenylphosphine oxide (ID3) were prepared as photoinitiators.

2,6-di-tert-butyl-p-cresol (BHT) was prepared as an antioxidant.

The respective components were prepared in amounts corresponding to the parts by weight listed in Tables 1 and 2, based on 100 g of the total photocurable shape-restoring polymeric composition**.** The components were mixed together, heated until melted, and subsequently cooled to room temperature to prepare the compositions of Examples 1-15.

In certain embodiments, caprolactone urethane trimethacrylate may be substituted for caprolactone urethane triacrylate in substantially the same proportion.

**[TABLE1]**

| **Component** | **Ex. 1** | **Ex.2** | **Ex.3** | **Ex.4** | **Ex.5** | **Ex.6** | **Ex.7** | **Ex.8** | **Ex.9** | **Ex.10** |
|---|---|---|---|---|---|---|---|---|---|---|
| PP1 (Aliphatic Urethane Dimethacrylate) | 60 | 60 | 60 | 60 | 60 | 60 | 60 | 60 | 60 | 60 |
| PP2 (Caprolactone Urethane Triacrylate) | 20 | 15 | 20 | 15 | 20 | 10 | 15 | 5 | 15 | 10 |
| PP3 (Bisphenol A Ethoxylate Dimethacrylate) | 0 | 5 | 0 | 5 | 0 | 10 | 5 | 15 | 5 | 10 |
| PP4 (Hydroxyethyl Methacrylate) | 20 | 20 | 10 | 0 | 0 | 15 | 15 | 15 | 5 | 0 |
| PP5 (Isobornyl Methacrylate) | 0 | 0 | 10 | 20 | 20 | 5 | 5 | 5 | 15 | 20 |
| ID1 | 7 | 14 | 2 | 2 | 14 | 2 | 9 | 1.5 | 10 | 14 |
| ID2 | 4 | 0.5 | 2 | 0 | 2 | 14 | 4 | 0 | 4 | 1 |
| ID3 | 4 | 3 | 3 | 4 | 4 | 4 | 3 | 2 | 1.5 | 1 |
| BHT | 1 | 1 | 0.5 | 1 | 1 | 1 | 0.5 | 1 | 1 | 0.5 |

**[TABLE2]**

| **Component** | **Ex.11** | **Ex.12** | **Ex.13** | **Ex.14** | **Ex.15** | **Comp.1** | **Comp.2** | **Comp.3** | **Comp.4** | **Comp.5** |
|---|---|---|---|---|---|---|---|---|---|---|
| PP1 | 60 | 60 | 60 | 50 | 60 | 20 | 10 | 10 | 10 | 5 |
| PP2 | 5 | 0 | 5 | 10 | 5 | 60 | 30 | 60 | 5 | 10 |
| PP3 | 15 | 10 | 15 | 10 | 15 | 10 | 5 | 10 | 5 | 5 |
| PP4 | 20 | 0 | 10 | 0 | 0 | 10 | 25 | 10 | 40 | 40 |
| PP5 | 0 | 30 | 10 | 30 | 20 | 10 | 30 | 10 | 40 | 40 |
| ID1 | 1.5 | 1.5 | 4 | 14 | 3 | 1 | 2 | 7 | 7 | 1.5 |
| ID2 | 7 | 0 | 4 | 1 | 6 | 0 | 0 | 4 | 5 | 1 |
| ID3 | 0 | 0 | 4 | 4 | 1 | 3 | 0 | 4 | 2 | 2 |
| BHT | 1 | 1 | 1 | 1 | 1 | 0.5 | 0.5 | 1 | 0.2 | 0.2 |

### Comparative Examples 1-5: Preparation of Comparative Example Compositions 1-5

Each component was prepared in amounts corresponding to the parts by weight listed in Table 2, based on 100 g of the total photocurable shape-restoring polymeric composition.

The components were mixed together, heated until melted, and subsequently cooled to room temperature to prepare the compositions of Comparative Examples 1-5.

### Experimental Example: Measurement of Glass Transition Temperature of the Photocurable Shape-Restoring Polymeric Composition

FIG. 1 is a graph illustrating the results of measuring the glass transition temperature of a photocurable shape-restoring polymeric composition according to an embodiment of the present disclosure.

Referring to FIG. 1, the composition of Example 6 was cured by ultraviolet irradiation and subsequently analyzed for its glass transition temperature.

The results demonstrate that the cured composition exhibited a glass transition temperature within a temperature range of about 50°C to about 110°C.

Accordingly, it was confirmed that the photocurable shape-restoring polymeric composition according to the present disclosure exhibits a glass transition temperature within the range of about 50°C to about 110°C. As a result, the composition is capable of recovering its original shape and restoring its elastic properties when exposed to temperatures higher than normal body temperature.

While the present disclosure has been described with reference to certain exemplary embodiments, it will be understood by those skilled in the art that various changes, modifications, substitutions, and equivalents may be made without departing from the spirit and scope of the present disclosure.

Accordingly, the present disclosure is not limited to the specific embodiments disclosed herein, and the scope of the present disclosure should be determined by the appended claims and their equivalents.

## Claims

1. A photocurable shape-restoring polymeric composition comprising:
a photocurable compound; and
a photoinitiator,
wherein the photocurable compound comprises at least one compound selected from the group consisting of aliphatic urethane dimethacrylate, caprolactone urethane triacrylate, bisphenol A ethoxylate dimethacrylate, hydroxyethyl methacrylate, and isobornyl methacrylate,
and
wherein the photoinitiator comprises at least one compound selected from the group consisting of bis(2,4,6-trimethylbenzoyl)-phenylphosphine oxide, methyl phenylglyoxylate, and 2,4,6-trimethylbenzoyl-diphenylphosphine oxide.

2. The photocurable shape-restoring polymeric composition of claim 1,
wherein the photocurable compound comprises 40 to 70 parts by weight of aliphatic urethane dimethacrylate, based on 100 parts by weight of the total photocurable shape-restoring polymeric composition.

3. The photocurable shape-restoring polymeric composition of claim 1,
wherein the photocurable compound comprises 1 to 25 parts by weight of caprolactone urethane triacrylate, based on 100 parts by weight of the total photocurable shape-restoring polymeric composition.

4. The photocurable shape-restoring polymeric composition of claim 1,
wherein the photocurable compound comprises 1 to 20 parts by weight of bisphenol A ethoxylate dimethacrylate, based on 100 parts by weight of the total photocurable shape-restoring polymeric composition.

5. The photocurable shape-restoring polymeric composition of claim 1,
wherein the photocurable compound comprises 1 to 20 parts by weight of hydroxyethyl methacrylate, based on 100 parts by weight of the total photocurable shape-restoring polymeric composition.

6. The photocurable shape-restoring polymeric composition of claim 1,
wherein the photocurable compound comprises 1 to 30 parts by weight of isobornyl methacrylate, based on 100 parts by weight of the total photocurable shape-restoring polymeric composition.

7. The photocurable shape-restoring polymeric composition of claim 1,
wherein the photoinitiator comprises 1 to 14 parts by weight of bis(2,4,6-trimethylbenzoyl)-phenylphosphine oxide, based on 100 parts by weight of the total photocurable shape-restoring polymeric composition.

8. The photocurable shape-restoring polymeric composition of claim 1,
wherein the photoinitiator comprises 0.1 to 15 parts by weight of methyl phenylglyoxylate, based on 100 parts by weight of the total photocurable shape-restoring polymeric composition.

9. The photocurable shape-restoring polymeric composition of any one of claims 1-6,
wherein the photoinitiator comprises 5 to 40 parts by weight of 2,4,6-trimethylbenzoyl-diphenylphosphine oxide, based on 100 parts by weight of the total photocurable shape-restoring polymeric composition.

10. The photocurable shape-restoring polymeric composition of claim 1,
further comprising 0.3 to 1.5 parts by weight of 2,6-di-tert-butyl-p-cresol as an antioxidant, based on 100 parts by weight of the total photocurable shape-restoring polymeric composition.
